# FASCICULE DE BREVET EUROPEEN

(11) **EP 2 402 222 B1**
(45) Date de publication et mention de la délivrance du brevet: **25.12.2013**
(21) Numéro de dépôt: 11170891.3
(22) Date de dépôt: 22.06.2011
(51) Int. Cl.: B60S 1/38, B60S 1/52

(54) **Connecteurs hydraulique et électrique alignés pour balai d'essuie-glace chauffant**
Ausgerichtete hydraulische und elektrische Anschlüsse für ein beheiztes Scheibenwischersystem
Aligned hydraulic and electric connectors for heated windscreen-wiper blade

(30) Priorité: 30.06.2010 FR 1002774
(43) Date de publication de la demande: 04.01.2012
(73) Titulaire: Valeo Systèmes d'Essuyage, 78321 Le Mesnil Saint Denis (FR)
(72) Inventeur: Jarasson, Jean-Michel, 78321 Le Mesnil Saint Denis (FR); Izabel, Vincent, 91380 Chilly Mazarin (FR); Caillot, Gérald, 78720 Cernay La Ville (FR)
(74) Mandataire: Tran, Chi-Hai

(56) Documents cités:
- EP-A1- 2 368 776
- DE-A1-102008 049 270
- DE-U1- 29 923 550
- US-A- 3 574 881
- US-A- 5 426 814

## Description

Le domaine de la présente invention est celui des équipements pour les véhicules, et plus particulièrement celui des équipements pour l'essuyage du pare-brise des automobiles.

Les automobiles sont couramment équipées de systèmes d'essuyage et de lavage pour assurer un essuyage et un lavage du pare-brise et éviter que la vision qu'a le conducteur de son environnement soit perturbée. Ces systèmes d'essuyage comprennent des bras effectuant un mouvement de va-et-vient angulaire au bout desquels sont installés des balais allongés, porteurs eux-mêmes de lames racleuses réalisées en une matière élastique. Ces lames frottent contre le pare-brise et évacuent l'eau en l'amenant en dehors du champ de vision du conducteur. Les balais sont réalisés sous la forme, soit, dans une version classique, d'étriers articulés qui tiennent la lame racleuse en plusieurs endroits discrets, soit, dans une version plus récente dénommée "flat blade" (pour "balais plat"), d'un ensemble semi-rigide qui maintient la lame racleuse sur toute sa longueur. Dans les deux solutions le balai est rattaché au bras tournant de l'essuie-glace par un ensemble constitué d'un connecteur mécanique et d'un adaptateur. Le connecteur est une pièce qui est fixée directement sur la structure du balai ou directement sur le flat blade, l'adaptateur étant une pièce intermédiaire qui permet la fixation du connecteur sur le bras de l'essuie-glace. Ces deux pièces sont reliées l'une à l'autre par un axe transversal qui autorise leur rotation relative.

Les essuie-glaces sont également équipés de dispositifs d'amenée d'un liquide lave-vitre qui est acheminé depuis un réservoir situé sur le véhicule et qui est pulvérisé en direction du pare-brise par des gicleurs situés généralement sur le capot ou sur la grille de baie de pare-brise, soit sur l'essuie-glace lui-même pour une meilleure distribution du liquide. Dans le cas de buses placées sur les balais, le liquide lave-vitre est acheminé, avant d'être réparti entre elles, par des canalisations qui sont fixées sur le bras de l'essuie-glace et qui sont raccordées au système de distribution du balai au niveau du connecteur. Le connecteur comporte ainsi des orifices aptes à recevoir, par une liaison étanche, les embouts desdites canalisations.

Dans le domaine de l'après-vente des véhicules automobiles, on trouve également des dispositifs de chauffage de l'essuie-glace pour dégeler le balai en cas de grand froid et éviter qu'il colle au pare-brise sous l'action du gel. Ces dispositifs, qui sont plus spécialement adaptés à des balais flat blade, comportent généralement un dispositif chauffant intégré dans l'ensemble porteur de la lame racleuse et sur laquelle sont déposées des résistances électriques. Ils nécessitent eux aussi un dispositif de connexion électrique, placé au niveau du connecteur, pour transmettre au dispositif chauffant le courant électrique provenant du véhicule.

Le document DE-A-102008049270 montre le préambule de la revendication 1.

Tous ces éléments doivent être raccordés lorsqu'un utilisateur doit changer ses essuie-glaces, ce qui implique une multiplicité d'opérations distinctes qui rend difficile le remplacement d'un essuie-glace par un utilisateur non averti. Il importe donc de simplifier les opérations à conduire lors de ce remplacement.

La présente invention a pour but de remédier à cet inconvénient en proposant un dispositif de connexion hydraulique et électrique à un connecteur de balai d'essuie-glace qui soit simple à installer, même par un utilisateur peu averti.

A cet effet, l'invention a pour objet un ensemble constitué par un connecteur hydraulique et un connecteur électrique destinés à assurer l'alimentation respectivement en un liquide et en courant électrique, à un balai d'essuie-glace chauffant, ledit connecteur hydraulique comportant des moyens de connexion hydrauliques aptes à coopérer avec des moyens de connexion correspondants positionnés sur une pièce d'accrochage dudit balai sur ledit essuie-glace et ledit connecteur électrique comportant des moyens de connexion électrique aptes à coopérer avec des moyens de connexion correspondants positionnés sur ladite pièce d'accrochage. Il est caractérisé en ce que ledit connecteur hydraulique et ledit connecteur électrique comportent des moyens de positionnement relatif de l'un par rapport à l'autre assurant une orientation similaire pour leurs moyens de connexion, de sorte que ces moyens de connexion soient aptes à coopérer avec les moyens correspondants sur ladite pièce d'accrochage par un déplacement simultané des deux connecteurs. Cette pièce d'accrochage est un connecteur mécanique du balai d'essuie-glace.

L'orientation similaire des deux connecteurs et leur solidarisation l'un à l'autre permet leur branchement simultané, au cours d'une opération unique d'emmanchement dans le connecteur mécanique, effectuée par un opérateur.

Dans un mode particulier de réalisation, le connecteur électrique s'insère dans un logement du connecteur hydraulique selon l'axe d'introduction de l'ensemble sur la pièce d'accrochage.

On garantit ainsi un bon alignement du connecteur électrique sur le connecteur hydraulique, propice à un emmanchement simultané des deux connecteurs.

Avantageusement ledit logement est une cage comportant une partie flexible apte à coopérer avec un doigt porté par le connecteur électrique de façon à former un encliquetage.

Dans un autre mode particulier de réalisation, le connecteur électrique s'insère sur le connecteur hydraulique selon une direction perpendiculaire à l'axe d'introduction de l'ensemble sur la pièce d'accrochage.

Avantageusement, le connecteur électrique comporte deux rails faisant saillie de façon à prendre appui sur deux glissières portées par le connecteur hydraulique lors de son insertion sur ledit connecteur hydraulique.

Préférentiellement, lesdites glissières comportent une partie flexible apte à coopérer avec un doigt porté par le connecteur électrique de façon à former un encliquetage.

De façon préférentielle, le connecteur électrique comporte deux extensions faisant saillie et aptes à enserrer un montant transversal porté par le connecteur hydraulique, lors de son insertion sur ledit connecteur hydraulique, de façon à assurer une solidarisation longitudinale des deux connecteurs.

De façon plus préférentielle, le connecteur électrique comporte une excroissance dans laquelle peut s'insérer une glissière portée par le connecteur hydraulique de façon à empêcher une fonction rotation relative du connecteur électrique dans le plan du montant transversal.

Avantageusement encore, la glissière est flexible et comporte un doigt apte à coopérer avec un élément porté par le connecteur électrique de façon à former un encliquetage.

L'invention couvre également un connecteur hydraulique apte à constituer avec un connecteur électrique un ensemble tel que décrit ci-dessus ainsi qu'un connecteur électrique apte à constituer avec un connecteur hydraulique un ensemble tel que décrit ci-dessus. Elle revendique enfin un système d'essuyage comprenant un ensemble tel que décrit ci-dessus.

L'invention sera mieux comprise, et d'autres buts, détails, caractéristiques et avantages de celle-ci apparaîtront plus clairement au cours de la description explicative détaillée qui va suivre, de plusieurs modes de réalisation de l'invention donnés à titre d'exemples purement illustratifs et non limitatifs, en référence aux dessins schématiques annexés.

Sur ces dessins:
- la figure 1 est une vue générale, en perspective, d'un essuie-glace pour véhicule automobile ;
- la figure 2 est une vue de détail de la figure 1 ;
- la figure 3 est une vue en perspective d'un ensemble constitué d'un connecteur hydraulique et d'un connecteur électrique selon un premier mode de réalisation de l'invention, en mode désaccouplés ;
- la figure 4 est une vue en perspective d'un ensemble constitué d'un connecteur hydraulique et d'un connecteur électrique selon un premier mode de réalisation de l'invention, en mode accouplés ;
- la figure 5 est une vue en perspective d'un ensemble constitué d'un connecteur hydraulique et d'un connecteur électrique selon un second mode de réalisation de l'invention, en mode désaccouplés ;
- la figure 6 est une vue en perspective d'un ensemble constitué d'un connecteur hydraulique et d'un connecteur électrique selon un second mode de réalisation de l'invention, en mode accouplés ;
- la figure 7 est une vue en perspective d'un ensemble constitué d'un connecteur hydraulique et d'un connecteur électrique selon un troisième mode de réalisation de l'invention, en mode désaccouplés, et
- la figure 8 est une vue en perspective d'un ensemble constitué d'un connecteur hydraulique et d'un connecteur électrique selon un troisième mode de réalisation de l'invention, en mode accouplés.

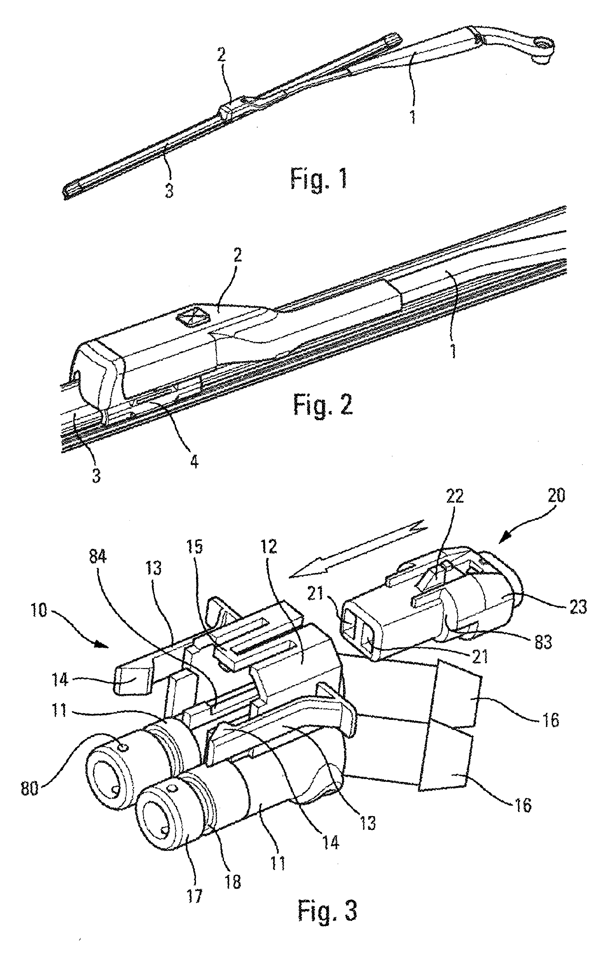

En se référant aux figures 1 et 2, on voit un essuie-glace composé classiquement d'un porte-balai ou bras 1 se terminant à son extrémité externe par une chape 2, qui est fixée par sertissage sur le bras 1 et qui a pour fonction, par l'intermédiaire d'un adaptateur, de supporter le balai 3 équipé de son connecteur mécanique, autrement appelé pièce d'accrochage 4 du balai 3 sur l'essuie-glace. Dans la description qui suit, on emploi le terme connecteur mécanique comme équivalent de la pièce d'accrochage. De manière alternative, cette chape peut également être formée à l'extrémité de bras par déformation de cette dernière et constituer un ensemble unitaire avec le bras.

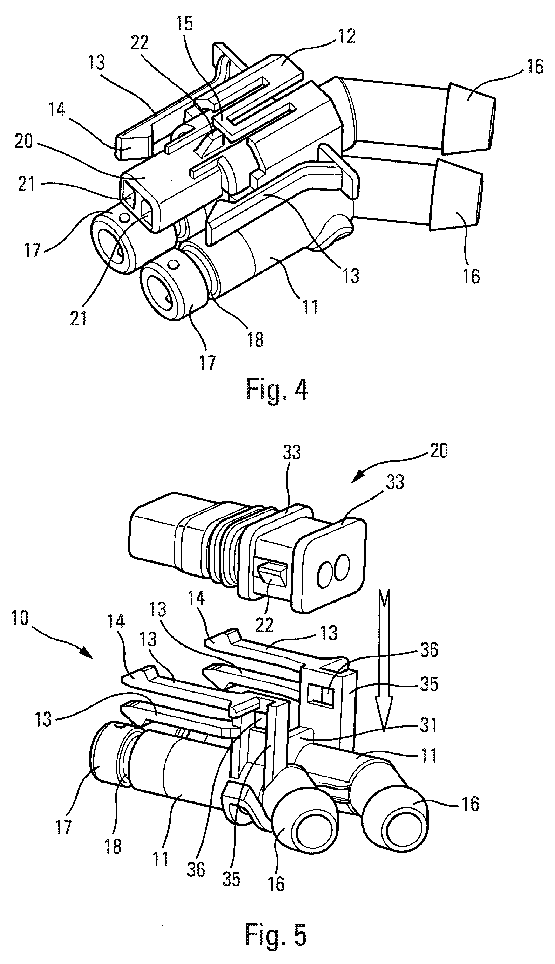

En se référant maintenant aux figures 3 et 4 on voit, dans un premier mode de réalisation, deux éléments coopérant avec le connecteur mécanique 4, à savoir un connecteur hydraulique 10 et un connecteur électrique 20, qui sont destinés à assurer les raccordements hydraulique et électrique, respectivement avec au moins une canalisation hydraulique et au moins un fil électrique, d'alimentation en liquide lave-vitre et en courant électrique.

Dans l'exemple de réalisation, le connecteur hydraulique 10 comprend deux canalisations 11 de fourniture du liquide lave-vitre au connecteur mécanique, qui sont placées parallèlement l'une à l'autre et reliées par une structure rigide qui les maintient ensemble. Sans sortir de la portée de l'invention, il également prévu que le connecteur hydraulique ne comprennent qu'une seule canalisation, par exemple pour projeter le liquide lave-vitre sur un des côtés du balai d'essuie-glace. La description qui suit est faite en rapport avec un exemple de réalisation comprenant une pluralité de canalisations 11 mais il est évident que cette description s'applique au cas où les composants du système ne comprennent qu'une seule canalisation.

Ces canalisations sont ici au nombre de deux car une première canalisation assure la fourniture de liquide lave-vitre pour un premier côté du balai 3 alors que la seconde canalisation assure la fourniture de liquide lave-vitre au second côté du balai 3, opposé au premier côté. Cette structure rigide a une forme sensiblement parallélépipédique, ouverte à ses deux extrémités longitudinales, formant au-dessus des canalisations 11 logement ou cage 12 dans laquelle vient s'insérer longitudinalement le connecteur électrique 20. De cette cage 12 s'étendent longitudinalement deux clips de maintien du connecteur hydraulique 10 sur le connecteur mécanique 4, qui sont formés par deux barrettes 13 se terminant par des crochets 14 formant moyens de retenue du connecteur hydraulique 10 grâce à des faces coopérantes du connecteur mécanique 4. Ces barrettes 13 sont flexibles et se déplacent dans un plan parallèle au plan qui passe par l'axe des deux canalisations 11 au moment du montage de l'ensemble sur le connecteur mécanique 4. Sur sa face supérieure, la cage 12 comporte une barrette flexible 15 qui est susceptible de se soulever pour laisser passer un doigt 22 porté par le connecteur électrique et former avec lui un assemblage par encliquetage.

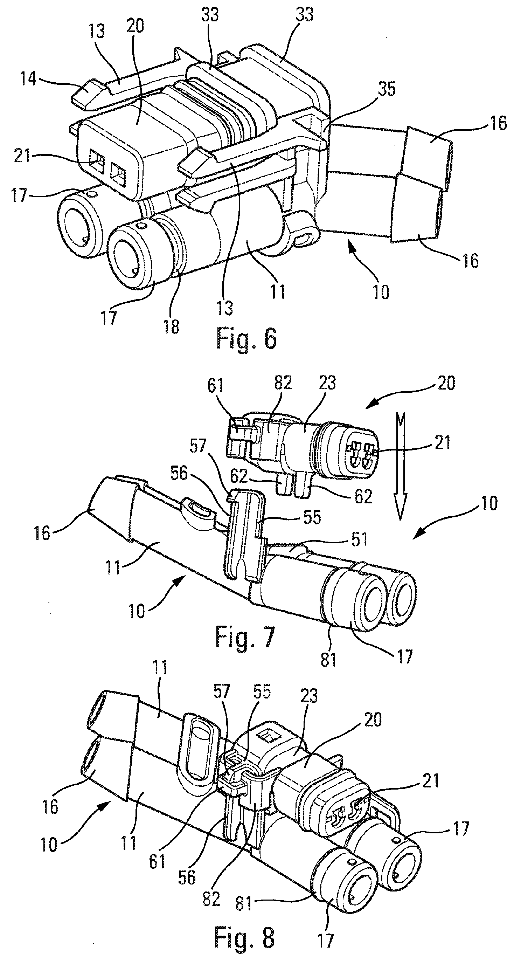

Les canalisations 11 comportent à une de leurs extrémités des premiers moyens de connexion 16 aux canalisations d'amenée (non représentées) du liquide en provenance du bras de l'essuie-glace, et à l'autre extrémité des seconds moyens de connexion 17, du type attache-rapide, destinés à un raccordement au connecteur mécanique 4 et à ses moyens de distribution du liquide lave-vitre vers les buses du balai 3. Une rainure circonférentielle 18 reçoit un joint torique d'étanchéité (référence 81 sur les figures 7 et 8), les réceptacles correspondants du connecteur mécanique 4 ayant alors la forme de tubes creux dans lesquels s'insèrent ces seconds moyens 17.

Le connecteur électrique 20 présente une forme allongée sensiblement parallélépipédique, dont le corps 23 reprend la forme intérieure de la cage 12 pour pouvoir s'y intégrer et solidariser le connecteur électrique 20 au connecteur hydraulique 10. On comprend donc que la forme extérieure du corps 23 est complémentaire de la forme intérieure de la cage 12. Le connecteur électrique 20 comporte, du côté de la jonction avec le connecteur mécanique 4, deux cavités 21 orientées longitudinalement qui sont destinées à recevoir deux cosses métalliques (non représentées) pour assurer la connexion avec des éléments métalliques correspondants positionnés sur le connecteur mécanique 4. A l'intérieur de ces cavités 21 les cosses sont serties sur les fils d'alimentation électrique, provenant du bras de l'essuie-glace. Sur sa face supérieure le connecteur électrique 20 porte le doigt 22 apte à coopérer avec la barrette flexible 15 du connecteur hydraulique pour maintenir en place le connecteur électrique sur le connecteur hydraulique et l'empêcher, après montage, de revenir en arrière une fois qu'il a soulevé la barrette flexible 15 et dépassé l'extrémité de celle-ci. Cette liaison barrette flexible 15 - doigt 22 assure la solidarisation des deux connecteurs après leur montage et interdit un déplacement relatif du connecteur électrique 20 par rapport au connecteur hydraulique 10 par mise en butée de l'un contre l'autre.

Dans cette variante, le connecteur électrique 10 est inséré selon une direction parallèle à la direction d'extension des canalisations 11.

En se référant aux figures 5 et 6, on va maintenant décrire un deuxième mode de réalisation. Les éléments des connecteurs hydraulique et électrique identiques au premier mode de réalisation sont désignés par le même chiffre de référence et ne sont pas décrits à nouveau.

Le connecteur hydraulique 10 comporte de même que précédemment deux canalisations 11, identiques à celles du premier mode de réalisation, qui sont reliées par une structure rigide. Celle-ci a, en revanche, la forme de deux montants latéraux, formant glissières 35 et s'étendant perpendiculairement à la direction longitudinale d'extension des canalisations 11. Ces deux glissières sont reliées l'une à l'autre par un montant transversal 31 qui assure leur solidarisation. La structure rigide comporte ici quatre barrettes 13, s'étendant longitudinalement selon la direction d'extension des canalisations 11 et se terminant par des crochets 14 pour la fixation du connecteur hydraulique 10 sur le connecteur mécanique 4. Comme pour tous les modes de réalisation, ces barrettes 13 sont flexibles. Dans ce deuxième mode de réalisation, les barrettes 13 se déplacent dans un plan perpendiculaire au plan qui passe par l'axe des deux canalisations 11 au moment du montage de l'ensemble sur le connecteur mécanique 4.

La fonction de blocage en translation assurée précédemment par la barrette flexible 15 est, ici, assurée par les deux glissières 35 qui peuvent s'écarter transversalement l'une de l'autre. Elles comportent chacune une encoche 3 6 apte à recevoir un doigt 22 porté sur chacune des faces latérales du connecteur électrique 20. Ce dernier a, comme précédemment, une forme parallélépipédique et comporte deux cavités longitudinales 21 aptes à recevoir des cosses de connexion au connecteur mécanique 4 et raccordées aux fils d'alimentation électrique du bras de l'essuie-glace.

Le connecteur 10 associé à ce mode de réalisation a, là encore une forme parallélépipédique, dont la largeur correspond à la distance existant entre les deux glissières 35, de façon qu'il puisse s'insérer entre elles. Il comporte également deux collerettes qui font saillie périphériquement par rapport au volume du parallélépipède de façon à former des rails 33 aptes à coopérer avec les extrémités longitudinales des glissières 35 lors de la mise en place du connecteur électrique 20. Alors que la fixation du connecteur électrique 20 sur le connecteur hydraulique 10 s'effectuait, dans le premier mode de réalisation, par un déplacement du connecteur électrique 20 selon une direction longitudinale pour le faire entrer à l'intérieur de la cage 12 correspondant à la direction d'introduction de l'ensemble selon l'invention sur la pièce d'accrochage 4, dans le second mode, le déplacement s'effectue selon une direction verticale ou perpendiculaire à cet axe ou direction d'introduction, le connecteur s'insérant entre les glissières 35 jusqu'à ce que les deux doigts 22 pénètrent dans les encoches 36 pour s'y immobiliser. Autrement dit, le connecteur électrique 20 est inséré dans le connecteur hydraulique 10 selon une direction perpendiculaire à la direction d'extension des canalisations 11.

Le troisième mode de réalisation, représenté sur les figures 7 et 8, est analogue au second mode avec un engagement du connecteur électrique sur le connecteur hydraulique selon une direction perpendiculaire à la direction d'extension des canalisations 11. La structure rigide comporte toujours un montant transversal 51 de solidarisation des deux canalisations 11 mais elle ne comporte qu'une seule et unique glissière 55 s'étendant perpendiculairement à la direction longitudinale de ces canalisations 11 et qui est positionnée latéralement par rapport à l'une d'elles. On comprend donc que cette glissière 55 est sur le côté du connecteur hydraulique 20. De cette glissière s'étend, transversalement et vers l'extérieur par rapport aux canalisations 11, une nervure 56 qui se termine à son extrémité supérieure par un doigt 57 destiné à servir de moyen de retenue au connecteur électrique 20 après son encliquetage sur le connecteur hydraulique 10.

Le connecteur 10 associé à ce mode de réalisation a, là encore, une forme parallélépipédique et comporte, sur sa face inférieure, deux extensions verticales 62 qui ont pour objet de venir chevaucher le montant transversal 51 lors de l'installation du connecteur électrique 20 sur le connecteur hydraulique 10, pour assurer son maintien et empêcher des mouvements de bascule de l'un par rapport à l'autre. La coopération des extensions verticales 62 avec le montant transversal 51 interdit tout déplacement longitudinal entre les deux connecteurs 10 et 20 et assure l'alignement de leurs moyens de connexion hydraulique 17 et électrique 21 avec les moyens correspondants positionnés sur le connecteur mécanique 4. Le connecteur électrique 10 comporte par ailleurs une excroissance 61, en forme de poignée, dans laquelle peut s'insérer la glissière 55 du troisième mode de réalisation et sur laquelle peut venir s'encliqueter le doigt 57 du connecteur hydraulique. La largeur de l'ouverture de cette excroissance est telle qu'elle permet un débattement transversal de la glissière 55 qui correspond au déplacement nécessaire à l'enclenchement et au déclenchement du doigt 57 de l'excroissance 61. Plus particulièrement, l'excroissance 61 est relié au côté du corps 23 par un arceau ouvert 82 au travers duquel la glissière 55 s'étend.

La coopération de l'excroissance 61, située sur une face latérale du connecteur électrique 20, avec la glissière 55, portée sur le côté du connecteur hydraulique 10 empêche une rotation relative du connecteur électrique 20 par rapport au connecteur hydraulique 10 dans le plan général du montant transversal 51.

On va maintenant décrire l'assemblage de connecteurs hydraulique et électrique selon le premier mode de réalisation et leur utilisation lors du montage d'un balai d'essuie-glace. L'assemblage de connecteurs selon les deuxième et troisième modes de réalisation et le montage d'un balai d'essuie-glace s'effectuent d'une manière analogue, la direction d'introduction du connecteur électrique sur le connecteur hydraulique étant toutefois différente.

Le connecteur hydraulique 10 est préalablement raccordé, de façon connue, à des canalisations d'amenée du liquide lave-vitre grâce à ses premiers moyens de connexion 16. Dans le connecteur électrique 20 sont sertis des fils d'alimentation en courant électrique du système de chauffage intégré de l'ensemble porteur de la lame racleuse, plus particulièrement du balai d'essuie-glace.

L'opérateur insère l'extrémité du connecteur électrique 20 opposée à celle portant les fils d'alimentation, dans la cage 12 du connecteur hydraulique et l'enfonce jusqu'à ce que le doigt 22 du connecteur électrique vienne soulever la barrette flexible 15 et dépasse son extrémité, la laissant alors retomber et former un blocage par encliquetage. Dans cette position le connecteur électrique 20 est solidarisé avec le connecteur hydraulique 10, son corps 23 étant maintenu, latéralement par la cage 12 et longitudinalement, d'une part par le doigt 22, et d'autre part par des faces 83 qui coopèrent avec des faces d'appui 84 correspondantes pratiquées sur la paroi interne de la cage 12 du connecteur hydraulique 10.

Dans le cas des connecteurs hydraulique et électrique selon les second et troisième modes de réalisation l'insertion du connecteur électrique s'effectue verticalement et ce dernier est maintenu en place de façon similaire, par la coopération d'un doigt 22 ou 57 avec les parois de l'encoche correspondante 36 ou de l'extension latérale 61.

L'ensemble de ces deux connecteurs est alors maintenu temporairement en place sur le bras 1 de l'essuie-glace par des clips ou par la rigidité naturelle des canalisations d'amenée du liquide lave-vitre et par celle des fils d'alimentation électrique. Cette rigidité laisse toutefois une certaine liberté de mouvement à l'ensemble pour qu'il puisse être aligné avec le connecteur mécanique 4 lors du montage d'un balai 3 sur le bras 1.

L'opérateur chargé du montage du balai 3 sur le bras 1, que ce soit en neuf ou en rechange, aligne le connecteur mécanique 4 du balai de façon que son axe longitudinal corresponde à celui du connecteur hydraulique, puis il enfonce les seconds moyens de connexion 17 dans les réceptacles du connecteur mécanique prévus à cet effet. L'étanchéité est assurée par la présence de joints toriques 81 positionnés dans les rainures 18 des canalisations 11.

La solidarisation, selon l'invention, des connecteurs hydraulique et électrique assure un positionnement relatif précis des cavités 21 et donc des cosses qu'elles contiennent, par rapport à l'axe des canalisations 11. Du côté opposé, sur le connecteur mécanique 4 les connecteurs électriques sont eux aussi positionnés de façon précise par rapport aux axes des réceptacles de ces canalisations, le connecteur mécanique étant généralement réalisé de façon monobloc. Les écarts géométriques étant définis de façon identiques sur le connecteur mécanique et sur l'ensemble des connecteurs hydraulique et électrique, les cosses du connecteur électrique 20 se retrouvent en face des contacteurs du connecteur mécanique dans lesquels ils s'enclenchent naturellement lors de l'enfoncement de l'ensemble constitué par les deux connecteurs dans le connecteur mécanique 4. On obtient donc par une seule opération de poussée du connecteur hydraulique 10 contre le connecteur mécanique 4, à la fois la solidarisation étanche des canalisations 11 et la mise en relation des fils d'alimentation portés par le bras 1 avec ceux alimentant le système de chauffage du balai 3.

On atteint ainsi le but poursuivi, à savoir réaliser une connexion très simple et exempte de risque d'un mauvais montage, pour les deux alimentations, en liquide de lave-vitre et en courant du système de chauffage du balai d'essuie-glace.

D'autres variantes sont possibles, comme par exemple une réalisation monobloc des deux connecteurs hydraulique et électrique, reproduisant en négatif la forme du connecteur mécanique 4 au niveau de sa liaison avec eux.

## Revendications

1. Ensemble constitué par un connecteur hydraulique (10) et un connecteur électrique (20) destinés à assurer l'alimentation respectivement en un liquide et en courant électrique, à un balai d'essuie-glace chauffant (3), ledit connecteur hydraulique comportant des moyens de connexion hydrauliques (17) aptes à coopérer avec des moyens de connexion correspondants positionnés sur une pièce d'accrochage (4) dudit balai (3) sur ledit essuie-glace et ledit connecteur électrique (20) comportant des moyens de connexion électrique (21) aptes à coopérer avec des moyens de connexion correspondants positionnés sur ladite pièce d'accrochage (4),
**caractérisé en ce que** ledit connecteur hydraulique (10) et ledit connecteur électrique (20) comportent des moyens de positionnement relatif de l'un par rapport à l'autre (12, 35, 51 ; 23, 33, 62) assurant une orientation similaire pour leurs moyens de connexion (17, 21), de sorte que ces moyens de connexion soient aptes à coopérer avec les moyens correspondants sur ladite pièce d'accrochage (4) par un déplacement simultané des deux connecteurs (10, 20).

2. Ensemble selon la revendication 1 dans lequel le connecteur hydraulique (10) comprend un logement (12) dans lequel le connecteur électrique (10) s'insère selon l'axe d'introduction de l'ensemble sur la pièce d'accrochage (4).

3. Ensemble selon la revendication 2 dans lequel ledit logement est une cage (12) comportant une partie flexible (15) apte à coopérer avec un doigt (22) porté par le connecteur électrique de façon à former un encliquetage.

4. Ensemble selon la revendication 1 dans lequel le connecteur électrique (20) s'insère sur le connecteur hydraulique (10) selon une direction perpendiculaire à l'axe d'introduction de l'ensemble sur la pièce d'accrochage (4).

5. Ensemble selon la revendication 4 dans lequel le connecteur électrique (20) comporte deux rails (33) faisant saillie de façon à prendre appui sur deux glissières (35) portées par le connecteur hydraulique (10) lors de son insertion sur ledit connecteur hydraulique.

6. Ensemble selon la revendication 5 dans lequel les deux glissières (35) forme deux montants qui s'étendent perpendiculairement à la direction longitudinale d'extension des canalisations (11) et latéralement par rapport à ces dernières.

7. Ensemble selon les revendications 5 ou 6 dans lequel lesdites glissières (35) comportent une encoche (36) apte à coopérer avec un doigt (22) porté par le connecteur électrique (20) de façon à former un encliquetage.

8. Ensemble selon la revendication 4 dans lequel le connecteur électrique (20) comporte deux extensions (62) faisant saillie et qui enserrent un montant transversal (51) porté par le connecteur hydraulique (10).

9. Ensemble selon la revendication 8 dans lequel le connecteur électrique (20) comporte une excroissance (61) sur une face latérale du connecteur électrique (20) dans laquelle s'insère une glissière (55) portée sur le côté du connecteur hydraulique (10).

10. Ensemble selon la revendication 9 dans lequel la glissière (55) est flexible et comporte un doigt (57) apte à coopérer avec l'excroissance (61) porté par le connecteur électrique (20) de façon à former un encliquetage.

11. Connecteur hydraulique (10) apte à constituer avec un connecteur électrique (20) un ensemble selon l'une des revendications 1 à 10.

12. Connecteur électrique (20) apte à constituer avec un connecteur hydraulique (10) un ensemble selon l'une des revendications 1 à 10.

13. Système d'essuyage comprenant un ensemble selon l'une des revendications 1 à 10.

## Patentansprüche

1. Einheit bestehend aus einem hydraulischen Verbinder (10) und einem elektrischen Verbinder (20), die dazu bestimmt sind, die Versorgung eines beheizbaren Scheibenwischerblatts (3) mit einer Flüssigkeit bzw. mit elektrischem Strom zu gewährleisten, wobei der hydraulische Verbinder hydraulische Verbindungseinrichtungen (17) aufweist, die mit entsprechenden Verbindungseinrichtungen zusammenwirken können, die auf einem Befestigungsbauteil (4) des Blatts (3) auf dem Scheibenwischer positioniert sind, und der elektrische Verbinder (20) elektrische Verbindungseinrichtungen (21) aufweist, die mit entsprechenden Verbindungseinrichtungen zusammenwirken können, die auf dem Befestigungsbauteil (4) positioniert sind,
**dadurch gekennzeichnet, dass** der hydraulische Verbinder (10) und der elektrische Verbinder (20) Einrichtungen zur gegenseitigen Positionierung (12, 35, 51; 23, 33, 62) aufweisen, die eine gleiche Ausrichtung für ihre Verbindungseinrichtungen (17, 21) gewährleisten, so dass diese Verbindungseinrichtungen durch eine gleichzeitige Verschiebung der zwei Verbinder (10, 20) mit den entsprechenden Einrichtungen auf dem Befestigungsbauteil (4) zusammenwirken können.

2. Einheit nach Anspruch 1, wobei der hydraulische Verbinder (10) eine Aufnahme (12) enthält, in die der elektrische Verbinder (20) gemäß der Einführachse der Einheit auf das Befestigungsbauteil (4) eingesetzt wird.

3. Einheit nach Anspruch 2, wobei die Aufnahme ein Käfig (12) ist, der einen biegsamen Teil (15) aufweist, welcher mit einem vom elektrischen Verbinder getragenen Finger (22) zusammenwirken kann, um einen Rastmechanismus zu formen.

4. Einheit nach Anspruch 1, wobei der elektrische Verbinder (20) in einer Richtung lotrecht zur Einführachse der Einheit auf das Befestigungsbauteil (4) auf den hydraulische Verbinder (10) eingesetzt wird.

5. Einheit nach Anspruch 4, wobei der elektrische Verbinder (20) zwei Schienen (33) aufweist, die vorstehen, um bei seinem Einsetzen auf den hydraulischen Verbinder auf zwei vom hydraulischen Verbinder (10) getragenen Gleitführungen (35) aufzuliegen.

6. Einheit nach Anspruch 5, wobei die zwei Gleitführungen zwei Stege (35) formen, die sich lotrecht zur Längsausdehnungsrichtung der Rohrleitungen (11) und seitlich bezüglich dieser letzteren erstrecken.

7. Einheit nach den Ansprüchen 5 oder 6, wobei die Gleitführungen (35) eine Einkerbung (36) aufweisen, die mit einem vom elektrischen Verbinder (20) getragenen Finger (22) zusammenwirken kann, um einen Rastmechanismus zu formen.

8. Einheit nach Anspruch 4, wobei der elektrische Verbinder (20) zwei Verlängerungen (62) aufweist, die vorstehen und einen vom hydraulischen Verbinder (10) getragenen Quersteg (51) umklammern.

9. Einheit nach Anspruch 8, wobei der elektrische Verbinder (20) eine Ausstülpung (61) auf einer Seitenfläche des elektrischen Verbinders (20) aufweist, in die eine auf der Seite des hydraulischen Verbinders (10) getragene Gleitführung (55) eingesetzt wird.

10. Einheit nach Anspruch 9, wobei die Gleitführung (55) biegsam ist und einen Finger (57) aufweist, der mit der vom elektrischen Verbinder (20) getragenen Ausstülpung (61) zusammenwirken kann, um einen Rastmechanismus zu formen.

11. Hydraulischer Verbinder (10), der mit einem elektrischen Verbinder (20) eine Einheit nach einem der Ansprüche 1 bis 10 bilden kann.

12. Elektrischer Verbinder (20), der mit einem hydraulischen Verbinder (10) eine Einheit nach einem der Ansprüche 1 bis 10 bilden kann.

13. Wischsystem, das eine Einheit nach einem der Ansprüche 1 bis 10 enthält.

## Claims

1. Assembly formed by a hydraulic connector (10) and an electrical connector (20) which are intended to respectively supply a liquid and an electric current to a heating windscreen wiper blade (3), the said hydraulic connector comprising hydraulic connection means (17) able to cooperate with corresponding connection means positioned on a part (4) for attaching the said blade (3) to the said windscreen wiper, and the said electrical connector (20) comprising electrical connection means (21) able to cooperate with corresponding connection means positioned on the said attachment part (4),
**characterized in that** the said hydraulic connector (10) and the said electrical connector (20) comprise means (12, 35, 51; 23, 33, 62) for relative positioning with respect to one another that provides a similar orientation for their connection means (17, 21), such that these connection means are able to cooperate with the corresponding means on the said attachment part (4) by a simultaneous movement of the two connectors (10, 20).

2. Assembly according to Claim 1, in which the hydraulic connector (10) comprises a housing (12) in which the electrical connector (20) is inserted along the axis for introducing the assembly onto the attachment part (4).

3. Assembly according to Claim 2, in which the said housing is a cage (12) comprising a flexible part (15) able to cooperate with a finger (22) borne by the electrical connector so as to form a snap-fastening.

4. Assembly according to Claim 1, in which the electrical connector (20) is inserted onto the hydraulic connector (10) in a direction perpendicular to the axis for introducing the assembly onto the attachment part (4).

5. Assembly according to Claim 4, in which the electrical connector (20) comprises two projecting rails (33) so as to bear on two slides (35) borne by the hydraulic connector (10) during its insertion on to the said hydraulic connector.

6. Assembly according to Claim 5, in which the two slides (35) form two uprights which extend perpendicularly to the longitudinal direction of extension of the channels (11) and laterally with respect to the latter.

7. Assembly according to Claim 5 or 6, in which the said slides (35) comprise a notch (36) able to cooperate with a finger (22) borne by the electrical connector (20) so as to form a snap-fastening.

8. Assembly according to Claim 4, in which the electrical connector (20) comprises two projecting extensions (62) which entrap a transverse member (51) borne by the hydraulic connector (10).

9. Assembly according to Claim 8, in which the electrical connector (20) comprises a protuberance (61) on a lateral face of the electrical connector (20), into which there is inserted a slide (55) carried on the side of the hydraulic connector (10).

10. Assembly according to Claim 9, in which the slide (55) is flexible and comprises a finger (57) able to cooperate with the protuberance (61) borne by the electrical connector (20) so as to form a snap-fastening.

11. Hydraulic connector (10) able to form, together with an electrical connector (20), an assembly according to one of Claims 1 to 10.

12. Electrical connector (20) able to form, together with a hydraulic connector (10), an assembly according to one of Claims 1 to 10.

13. Wiper system comprising an assembly according to one of Claims 1 to 10.
